# EUROPÄISCHE PATENTANMELDUNG

(11) **EP 0 892 536 A2**
(43) Veröffentlichungstag der Anmeldung: **20.01.1999**
(21) Anmeldenummer: 98112805.1
(22) Anmeldetag: 10.07.1998
(51) Int. Cl.: H04M 3/42

(54) **Einrichtung zur Nutzung von Komfort-Merkmalen des Telefondienstes an über TK-Anlagen an analoge Wählanschlüsse eines Telefonnetzes angeschlossenen Endgeräten**

(30) Priorität: 15.07.1997 DE 19730295
(71) Anmelder: Deutsche Telekom AG, 53113 Bonn (DE)
(72) Erfinder: Schellhaas, Werner, 64372 Ober-Ramstadt (DE)

(57) **Zusammenfassung**

Es wird eine Einrichtung angegeben, die in an analogen Anschlüssen eines Telefonnetzes angeschlossenen Telekommunikationsanlagen (TK - Anlagen) oder in an derartigen TK-Anlagen angeschlossen Endgeräten vorgesehen werden kann, um eine bessere Nutzung sogenannter neuer Komfortdienstleistungsmerkmale auch an über diese TK - Anlagen an ein Telefonnetz angeschlossenen Endgeräten zu ermöglichen.
Mit Programmierung einer vom Endgerät ausgegebenen, von der jeweiligen TK - Anlage erkennbaren T - Net - Kennziffer wird es möglich, vom Endgerät aus einen für die Anforderung von neuen Komfortleistungsmerkmalen erforderlichen sogenannten Hook-Flash auf einem externen Anschluß der TK - Anlage auszulösen , ohne bisher verfügbare Funktionen der TK- Anlage oder des Endgerätes auszuschließen oder zu erschweren.

## Beschreibung

Die Erfindung betrifft eine Einrichtung nach dem Oberbegriff des Patentanspruchs 1 . Eine derartige Einrichtung wird in einer Telekommunikationsanlage (TK - Anlage) benötigt, um den Benutzer eines an dieser Anlage angeschlossenen Endgerätes in die Lage zu versetzen, die im Telefonnetz zur Verfügung stehenden, sogenannten neuen Komfortleistungsmerkmale ( siehe hierzu Brochure der Deutschen Telekom AG vom Mai 1997: 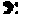 Bedienungsanleitung für die neuen Komfortleistungen im T - Net" ) zu nutzen.

Moderne TK - Anlagen erlauben u. a. die Benutzung von an da Endgeräten programmierten, sogenannten Amtskennziffern (AKZ) und meist zusätzlich Hauptanlagenkennziffern (HAKZ) - letztere für den Fall, daß die jeweilige TK - Anlage als Unteranlage hinter einer Hauptanlage eingesetzt wird. Derartige Amtskennziffern oder Hauptanlagenkennziffern sind meist programmierbar (häufig 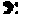 0" oder 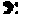 9") und bewirken die Durchschaltung des einem internen Anschluß der TK - Anlage angeschlossenen Endgerätes auf einen Wählanschluß des Telefonnetzes oder einen internen Anschluß der übergeordneten Hauptanlage, jeweils gefolgt von einer Pause vorgegebener Dauer, die für Umschaltvorgänge in der TK - Anlage sowie den nachfolgenden Belegungsvorgang im Telefonnetz oder der übergeordneten TK - Anlage benötigt wird. Erst nach Ablauf der Pause werden die bereits in das Endgerät eingegebenen Wahlinformationen oder Steuerbefehle an das Netz oder die übergeordnete TK - Anlage weitergegeben.

Die vom Benutzer einstellbaren Kennziffern erlauben eine bessere Funktionalität und eine komfortablere Nutzung verschiedener Leistungsmerkmale des Endgerätes hinter TK-Anlagen, wie z.B. Wahlwiederholung, Ziel - oder Kurzwahl oder Telefonbuchfunktion.

Endgeräte hinter TK - Anlagen verwenden außerdem eine kurze Schleifenunterbrechung (sogenannter 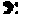 Flash"), um Steuerungsfunktionen der jeweiligen TK - Anlage zu aktivieren, z.B. eine Rückfrage vorzunehmen oder ein Gespräch weiterzuleiten. Diese kurzen Schleifenunterbrechungen werden in aller Regel durch Betätigen der Signaltaste R (Rückfragetaste) ausgelöst, die hierzu auf die erforderliche Unterbrechungszeit (ca.80 ms) programmiert ist.

Mit Einführung der neuen Komfortleistungsmerkmale im Telefonnetz der Deutschen Telekom AG für analoge Wählanschlüsse ( siehe hierzu Brochure der Deutschen Telekom AG vom Mai 1997: 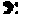 Bedienungsanleitung für die neuen Komfortleistungen im T- Net") wird zur Steuerung bestimmter Komfortleistungsmerkmale, wie z.B. Makeln oder Dreierkonferenz, ein Gabelschaltsignal (sogenannter 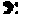 Hook - Flash") auf der Anschlußleitung erforderlich, das durch eine definierte Schleifenunterbrechung zwischen 160 ms und 320 ms Dauer gebildet wird. Obgleich manche Endgeräte eine Programmierung der Rückfragetaste (Signaltaste R) zur Erzeugung eines Hook - Flashs erlauben und manche TK - Anlagen auch die Funktion 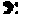 Hook-Flash" auf der externen Anschlußleitung unterstützen, kann ein Hook - Flash nicht unmittelbar an einem internen analogen Wählanschluß einer TK- Anlage angewandt werden, denn zum einen lösen die meisten TK - Anlagen bei Schleifenunterbrechungen > 120 ms an ihren internen Anschlüssen eine bestehende Verbindung aus, zum anderen sind alle Funktionen, die eine über die Rückfragetaste erzeugte kurze Schleifenunterbrechung (flash) benötigen, nicht mehr verfügbar, sobald eine Programmierung der Rückfragetaste zur Erzeugung eines Hook-Flash vorgenommen wurde. Eine problemlose Nutzung der neuen Leistungsmerkmale neben den bisher bereits verfügbaren Leistungsmerkmalen hinter einer TK - Anlage ist demnach nicht möglich .

Aufgabe der Erfindung ist deshalb eine Einrichtung, die eine einfache und komfortable Nutzung aller im Telefonnetz und in an dessen analoge Anschlüsse angeschlossenen TK - Anlagen zur Verfügung stehenden Leistungsmerkmale gewährleistet und es erlaubt, insbesondere die neuen Komfortleistungsmerkmale im T- Net der Deutschen Telekom AG möglichst ebenso einfach zu nutzen wie dies an einem direkt an einem analogen Netzabschluß (NTA) des Telefonnetzes angeschlossenen Endgerät der Fall ist.

Diese Aufgabe wird durch die im Patentanspruch 1 angegebenen Merkmale gelöst.

Mit der zusätzlichen Bereitstellung von Decodierschaltungen und/oder entsprechenden, Folgen von Signalisierungszeichen erkennenden Programmfunktionen in den Endgeräten oder der TK - Anlage wird eine einfache Möglichkeit geschaffen, durch Programmieren einer beispielsweise als 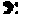 T-Net -Kennziffer" (TKZ) zu bezeichnenden, in der TK- Anlage die Ausgabe eines Hook- Flash und-im Endgerät oder der TK- Anlage- die Einhaltung einer Pause vorgegebener Dauer bewirkenden Signalisierungszeichenfolge, neue Komfortleistungsmerkmale aufzurufen, ohne hierzu Umprogrammierungen vornehmen zu müssen, die die Nutzung anderer Leistungsmerkmale des Telefonnetzes oder der TK - Anlage ausschließen oder erschweren. Die T- Net - Kennziffer kann dabei an den Endgeräten beliebig oft und an beliebiger Stelle einer Eingabe, vor oder während des Bestehens einer Verbindung eingegeben werden Zum Aufruf eines neuen, über Hook- Flash gesteuerten Komfortleistungsmerkmals im Telefonnetz braucht ein Benutzer eines Endgerätes damit beispielsweise nur noch die durch die jeweils verwendete TK- Anlage vorgegebene, einen Hook- Flash auslösende Signalisierungszeichenfolge für T- Net-Funktionen (Komfortleistungsmerkmale) und, unmittelbar darauffolgend, die weiteren Wähl- oder Steuerzeichen einzugeben. Das Endgerät oder die mit der Einrichtung nach der Erfindung ausgestattete TK- Anlage fügt nach Erkennen der T- Net- Kennziffer (TKZ) automatisch eine Pause ein und sendet die weiteren Wähl- oder Steuerzeichen danach aus.

Ausgestaltungen der Erfindung sind in den Patentansprüchen 2 bis 5 angegeben.

So sieht die im Patentanspruch 2 beschriebene Ausgestaltung der Erfindung die einen Hook-Flash der übergeordneten TK- Anlage auslösenden Signalisierungszeichenfolgen erkennenden Dekodierschaltungen und/oder Steuerprogrammfunktionen in den Endgeräten vor. Dies hat den Vorteil, daß die Signalisierungszeichenfolgen unmittelbar anhand der Tastenbedienungen oder, im Falle automatischer Signalisierung, aus den auszugebenden Speicherinhalten erkannt werden können, eine Decodierung von MFV- Zeichen somit nicht nötig ist. Zur Bildung von MFV- Zeichen und zur Zwischenspeicherung von Signalisierungszeichen können in den Endgeräten ohnehin vorhandene Schaltungen verwendet werden.

Patentanspruch 3 , dagegen, sieht die einen Hook- Flash der übergeordneten TK- Anlage auslösenden Signalisierungszeichenfolgen erkennenden Dekodierschaltungen und/oder Steuerprogrammfunktionen in den TK- Anlagen vor. In diesem Falle müssen zwar in diesen TK- Anlagen normalerweise nicht vorhandene Schaltungen (z.B. Zwischenspeicher oder DTMF- Generatoren ) vorgesehen werden, es ergibt sich jedoch der Vorteil daß auch heute in Betrieb befindliche Endgeräte, sofern sie MFV- Wahl verwenden, die Benutzung einer T-Net - Kennziffer zum Aufruf der neuen Komfortleistungen erlauben.

Eine im Patentanspruch 4 angegebene Ausgestaltung des Endgerätes nach der Erfindung sieht als erstes Signalisierungszeichen in einer ein neues Komfortleistungsmerkmal aufrufenden Signalisierungszeichenfolge eine kurze Schleifenunterbrechung , einen sogenannten 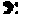 Flash" vor. Dies hat den Vorteil, daß zur manuellen Eingabe die Signaltaste R benutzt werden kann, die an den Endgeräten vieler TK- Anlagen zur Auslösung von TK-Anlagenfunktionen zur Abgabe eines Flash programmiert ist.

Patentanspruch 5 , schließlich, betrifft die Programmierung von Tasten zur Ausgabe jeweils aller zur Anforderung eines bestimmten Komfortleistungsmerkmals erforderlicher Signalisierungszeichen, so daß für jedes oder einen ausgewählten Teil der zur Verfügung stehenden Komfortleistungsmerkmale je eine Taste, die z.B. entsprechend beschriftet sein kann, vorhanden ist.

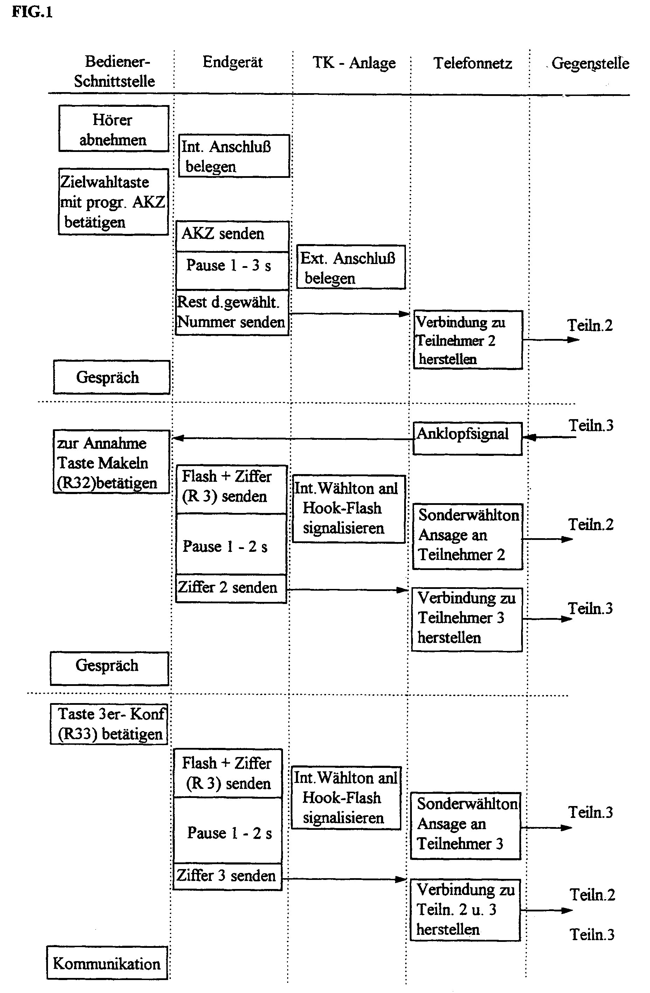

Anhand eines Ablaufdiagrammes (Fig.1) soll im folgenden ein Ausführungsbeispiel für ein mit der Einrichtung nach der Erfindung ausgestattetes Endgerät und dessen Wirkungsweise ausführlich beschrieben werden.

In Fig. 1 sind von oben nach unten, in chronologischer Folge, Schalthandlungen und Schaltvorgänge dargestellt, die während des Aufbaues einer Verbindung von einem über eine TK- Anlage an einen analogen Wählanschluß eines Telefonnetzes angeschlossenen Endgerät zu einer Gegenstelle und während der nachfolgenden Nutzung neuer Komfortleistungsmerkmale, im Endgerät an dessen Bedienerschnittstelle, in der TK-Anlage sowie im Telefonnetz ablaufen. In Spalten nebeneinander sind (von links nach rechts) wiedergegeben: Schalthandlungen des Bedieners (Teilnehmer 1) an der Bedienerschnittstelle des Endgerätes, Schaltvorgänge im Endgerät in der TK- Anlage und im Telefonnetz. In der rechten Spalte ist die Gegenstelle angegeben, zu der Verbindungen hergestellt oder mit der Signale ausgetauscht werden.

Für Endgerät und Wählanschluß sollen dabei beispielhaft folgende Festlegungen gelten:

| Endgerät: | |
|---|---|
| - Wahlverfahren | MFV (Mehrfrequenzwahlverfahren) |
| - Rückfragefunktion, intern | kurzer 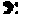 Flash" (R) , 80 ms Dauer |
| - Amtskennziffer (AKZ) | Ziffer 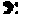 0" |
| - T-Net Kennziffer (TKZ) | 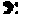 R 3" |

| Programmierte Tasten: | |
|---|---|
| - Zielwahltaste 1 | Rückfrage extern, 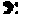 Hook-Flash" (R 3) |
| - Zielwahltaste 2 | Anklopfenden Tln. abweisen (R 3 0) |
| - Zielwahltaste 3 | Anklopfenden Tln. annehmen (R 3 1) |
| - Zielwahltaste 4 | Makeln (R 3 2) |
| - Zielwahltaste 5 | Dreierkonferenz (R 3 3) |

| Analoger Wählanschluß: | |
|---|---|
| - Wahlverfahren | MFV |
| - Komfortleistungsmerkmale | beantragt und freigeschaltet |
| - Rückfrage einleiten | Hook-Flash (HF) |
| - Anklopfenden Tln. abweisen | H F 0 |
| - Aklopfenden Tln.annehmen | H F 1 |
| - Makeln, ankl.Tln.annehmen | H F 2 |
| - Dreierkonferenz | H F 3 |

Die hier genannte T-Net -Kennziffer, deren Eingabe in der TK- Anlage eine als 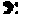 Hook-Flash" bezeichnete längere Schleifenunterbrechung (160 ms bis 320 ms) auf dem externen Anschluß auslöst, wurde hier als Signalisierungszeichenfolge 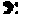 R 3" festgelegt. Es können jedoch anstelle des Signalisierungszeichens 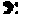 R" und/oder der Ziffer 3 auch andere Ziffern oder Steuerzeichen ( z.B. 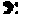 *3") programmiert werden. Dies ist von der verwendeten TK-Anlage abhängig. Die Signaltastenfunktion R, die einen kurzen Flash (80 ms) auf dem internen Anschluß der TK- Anlage auslöst, wird von dieser dahingehend verstanden, daß als nächstes ein Befehl zur Auslösung einer TK- Anlagen- Funktion folgen wird. Die anschließend übertragene Ziffer 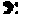 3" sagt der TK- Anlage - dies ist in der TK- Anlage so programmiert -, daß als Steuerzeichen für nachfolgend zu bestimmende neue Komfortleistungsmerkmale ein Hook- Flash auf dem externen Anschluß auszulösen ist. Weitere Ziffern werden erst nach Ablauf einer erfindungsgemäß vom Endgerät eingehaltenen Pause von diesem übermittelt und ins Telefonnetz weitergereicht und lösen dort die z.B. in der o. g. 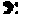 Bedienungsanleitung für die neuen Komfortleistungen im T-Net" der Deutschen Telekom AG beschriebenen, diesen Ziffern zugeordneten Funktionen wie z. B. Makeln, Dreierkonferenz usw. aus.

Die Programmierung der Zielwahltasten 1.... 5 am Endgerät erleichtert dem Benutzer das Aufrufen der genannten Komfortleistungsmerkmale. Insbesondere werden hiermit auch die für Schaltvorgänge in der TK - Anlage und im Telefonnetz erforderlichen Pausen automatisch eingehalten und Fehlsteuerungen somit vermieden. Die Zielwahltastenfunktionen lassen sich jedoch auch durch manuelle Betätigung der einzelnen Funktions- und Zifferntasten nacheinander bei Einhaltung der erforderlichen Pausen bzw. Abwarten der von der TK-Anlage und dem Telefonnetz aufgeschalteten Wähltöne, oder auch durch interne automatische Ablaufsteurungen ( z.B. bei Anrufbeantwortern) auslösen.

Nachdem ein Benutzer (Teilnehmer 1) an seinem Endgerät den Hörer abgehoben oder eine Freisprechtaste betätigt hat, belegt das Endgerät einen internen Anschluß, über den es mit der TK- Anlage verbunden ist. Der Benutzer hört den internen Wählton der TK- Anlage. Er möchte einen externen Teilnehmer (Teilnehmer 2) erreichen, dessen Rufnummer er in seinem Endgerät, zusammen mit einer den Netzzugang erleichternden, am Endgerät programmierten Amtskennziffer (AKZ = 0) gespeichert hat. Er betätigt die entsprechende Zielwahltaste. Das Endgerät sendet daraufhin zunächst die Amtskennziffer 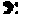 0" an die TK-Anlage, hält dann eine Pause von 1 bis 3 Sekunden ein und sendet schließlich ohne weitere Unterbrechung den Rest der eingespeicherten Nummer. Die TK- Anlage erkennt die Amtskennziffer und belegt einen externen Anschluß. Die zur Anschlußbelegung erforderlichen Schaltvorgänge sind bis zum Ende der vom Endgerät eingehaltenen Pause abgeschlossen, so daß die nach Ablauf der Pause vom Endgerät gesendeten Wählzeichen ins Telefonnetz weitergereicht werden und dort zum Aufbau der gewünschten Verbindung führen. Nach Herstellung der Verbindung zu Teilnehmer 2 kann das vom Teilnehmer 1 gewünschte Gespräch geführt werden.

Versucht nun ein weiterer Teilnehmer (Teilnehmer 3) Teilnehmer 1 zu erreichen, so stellt das Telefonnetz den Belegtzustand des Anschlusses von Teilnehmer 1 fest und erzeugt ein Anklopfsignal auf diesem Anschluß. Teilnehmer 1 hört dieses Signal und muß sich nun innerhalb einer vorgegebenen Zeit entscheiden, ob er den Anklopfenden abweisen oder annehmen möchte. Im Falle der Annahme hat er die Wahl, die aktive Verbindung zu Teilnehmer 2 auszulösen, oder sie zu halten, um mit beiden Teilnehmern abwechselnd zu sprechen (sog. Makeln) oder eine Dreierkonferenz einzuleiten.

In dem in Fig. 1 wiedergegebenen Beispiel entschließt sich Teilnehmer 1 zur Annahme des Anklopfenden und betätigt, da er die bisher aktive Verbindung nicht auslösen möchte, die für die Funktion 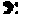 Makeln" programmierte Zielwahltaste 4 an seinem Endgerät. Das Endgerät sendet nun die unter dieser Taste gespeicherte Signalisierungszeichenfolge R 3 2 an die TK - Anlage, wobei es vor Ausgabe der letzten Ziffer (2) eine Pause von 1 bis 2 Sekunden einfügt. Die TK- Anlage erkennt den mit dem Signalisierungszeichen R vom Endgerät ausgelösten kurzen Flash und legt internen Wählton an. Die nachfolgende Ziffer 3 veranlaßt sie dann, einen Hook-Flash auf dem externen Anschluß auszulösen . Dieser Hook-Flash führt im Telefonnetz zu einer vorübergehenden Unterbrechung der aktiven Verbindung und zur Anschaltung eines Sonderwähltones an den Anschluß des Teilnehmers 1. Gleichzeitig bekommt Teilnehmer 2 eine Ansage aufgeschaltet, die ihn darüber informiert, daß die bisherige Verbindung gehalten wird. Nach Ablauf der im Endgerät programmierten Pause wird die Ziffer 2 das Telefonnetz gesendet, die das Netz veranlaßt, die noch inaktive Verbindung zum Teilnehmer 3 nunmehr zu aktivieren. Danach kann Teilnehmer 1 mit Teilnehmer 3 sprechen bis, z.B. durch erneutes Betätigen der Zielwahltaste 4, die Verbindung wieder zum Teilnehmer 2 umgeschaltet oder durch Auflegen des Hörers ausgelöst wird.

In Fig.1 möchte nun Teilnehmer 1 eine Dreierkonferenz mit Teilnehmer 2 und Teilnehmer 3 abhalten. Er betätigt die für 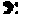 Dreierkonferenz" mit der Signalisierungszeichenfolge R 3 3 programmierte Zielwahltaste 5. Wieder gibt das Endgerät einen kurzen Flash (R) und die erste Ziffer (3) auf den internen Anschluß der TK- Anlage aus. Nach einer Pause folgt die weite Ziffer (3). Die TK- Anlage legt internen Wählton an den internen Anschluß und signalisiert aufgrund der dem Signalisierungszeichen R folgenden Ziffer 3 einen Hook- Flash auf dem externen Anschluß. Dieser veranlaßt das Netz, Sonderwählton anzuschalten, dem Teilnehmer 3 das Halten der Verbindung mitzuteilen und auf eine Anforderung eines neuen Komfortleistungsmerkmals zu warten. Dessen Aktivierung erfolgt nach Ablauf der im Endgerät programmierten Pause aufgrund der Übermittlung der zweiten Ziffer (3) der mit Betätigung der Zielwahltaste 5 ausgegebenen Signalisierungszeichenfolge, die die Schaltung einer Dreierkonferenz aller Teilnehmer herbeiführt. Danach können alle Teilnehmer miteinander kommunizieren.

## Patentansprüche

1. Einrichtung zur Nutzung von sogenannten neuen Komfortleistungsmerkmalen an Endgeräten , die über an analogen Wählanschlüssen betriebene Telekommunikationsanlagen (TK - Anlagen) an ein Telefonnetz angeschlossen sind, wobei diese TK - Anlagen, abhängig von einer vorgegebenen Folge (R 3) von über einen internen Anschluß zugeführten Signalisierungszeichen wie Schleifenunterbrechungen vorgegebener Dauer (Flashs) (R) oder MFV - Zeichen (0, 9), eine Unterbrechung vorgegebener Dauer ( sog. Hook - Flash) einer über eine externe Anschlußleitung zum Telefonnetz führenden Schleife auslösen, **dadurch gekennzeichnet ,** daß in den Endgeräten oder in den TK - Anlagen zusätzlich Decodierschaltungen und/oder entsprechende Funktionen dort installierter Steuerprogramme vorgesehen sind, die eine einen Hook - Flash der jeweiligen TK-Anlage auf der externen Anschlußleitung auslösende Folge von Signalisierungszeichen (R 3 ) unabhängig vom Betriebszustand des jeweiligen Endgerätes oder der TK- Anlage erkennen und als Befehl zur Auslösung eines Hook - Flash interpretieren, und daß das jeweilige Steuerprogramm, hiervon abhängig, die Zwischenspeicherung nachfolgender Signalisierungszeichen (2, 3) und deren um eine vorgegebene Zeitspanne verzögerte Weitergabe vorsieht.

2. Einrichtung nach Patentanspruch 1, dadurch gekennzeichnet , daß die Dekodierschaltungen oder entsprechenden Steuerprogrammfunktionen in den Endgeräten vorgesehen sind und Folgen (R 3 ) von Signalisierungszeichen, die einen Hook - Flash der übergeordneten TK - Anlage auf der externen Anschlußleitung auslösen, anhand der zur Erzeugung dieser Zeichen erforderlichen Tastenbetätigungen oder anhand von anstelle der Tastenbetätigungen ausgegebenden Speicherinhalten erkennen.

3. Einrichtung nach Patentanspruch 1 , dadurch gekennzeichnet , daß die Dekodierschaltungen und/oder entsprechenden Steuerprogrammfunktionen in den TK-Anlagen vorgesehen sind und von den Endgeräten übermittelte Signalisierungszeichen auswerten.

4. Einrichtung nach einem der vorstehenden Patentansprüche, dadurch gekennzeichnet , daß als erstes Signalisierungszeichen einer Folge von Signalisierungszeichen eine kurze Schleifenunterbrechung (Flash) vorgesehen ist, und daß zur Ausgabe dieser Schleifenunterbrechung an den Endgeräten die Funktion der Signaltaste R in ihrer Dauer entsprechend eingestellt ist.

5. Einrichtung nach einem der vorstehenden Patentansprüche, dadurch gekennzeichnet , daß Zielwahltasten der Endgeräte so programmiert sind, daß ihre Betätigung jeweils die Ausgabe einer ein gewünschtes neues Komfortleistungsmerkmal aufrufenden Folge (R 3 2, R 3 3) von Signalisierungszeichen auf die zur TK- Anlage führende Anschlußleitung auslöst.
